# EUROPEAN PATENT APPLICATION

(11) **EP 1 819 170 A1**
(43) Date of publication of application: **15.08.2007**
(21) Application number: 05814633.3
(22) Date of filing: 01.12.2005
(51) Int. Cl.: H04N 7/26

(54) **ENCODING DEVICE, METHOD, AND PROGRAM**

(30) Priority: 02.12.2004 JP 2004349817
(71) Applicant: Sony Corporation, Minato-ku Tokyo (JP); Sony Computer Entertainment Inc., Tokyo 107-0062 (JP)
(72) Inventor: TAKAHASHI, Kuniaki SONY COMPUTER ENTERTAINMENT INC, Tokyo 1070062 (JP); KIMURA, Tsuyoshi, Shinagawa-ku, Tokyo 1410001 (JP); FUJINAMI, Yasushi C/O SONY CORPORATION, Shinagawa-ku, Tokyo 1410001 (JP)
(74) Representative: Keston, Susan Elizabeth
(86) International application number: PCT/JP2005/022509
(87) International publication number: WO 2006/059796

(57) **Abstract**

Pictures can be encoded such that no display wait occurs on a decoding side. Pictures are re-encoded such that their encoding order is changed. As a result, picture B₃ is detected as picture Na+1 (Fig. 11A) that is decoded later than picture I₁ (picture Nd) by two pictures. Thus, picture P₃ (picture Na+2) (a picture displayed later than picture I₁ by two pictures) is contained in picture sequence {I₁, P₂, B₃}. As shown in Fig. 11C and Fig. 11D, picture B₃ is decoded at a time corresponding to its displaying time. Thus, picture B₃ can be displayed at its displaying time.

## Description

### Technical Field

The present invention relates to an encoding apparatus, a method thereof, and a program thereof, in particular, to those that are capable of encoding pictures such that no display wait occurs on a decoding side.

### Background Art

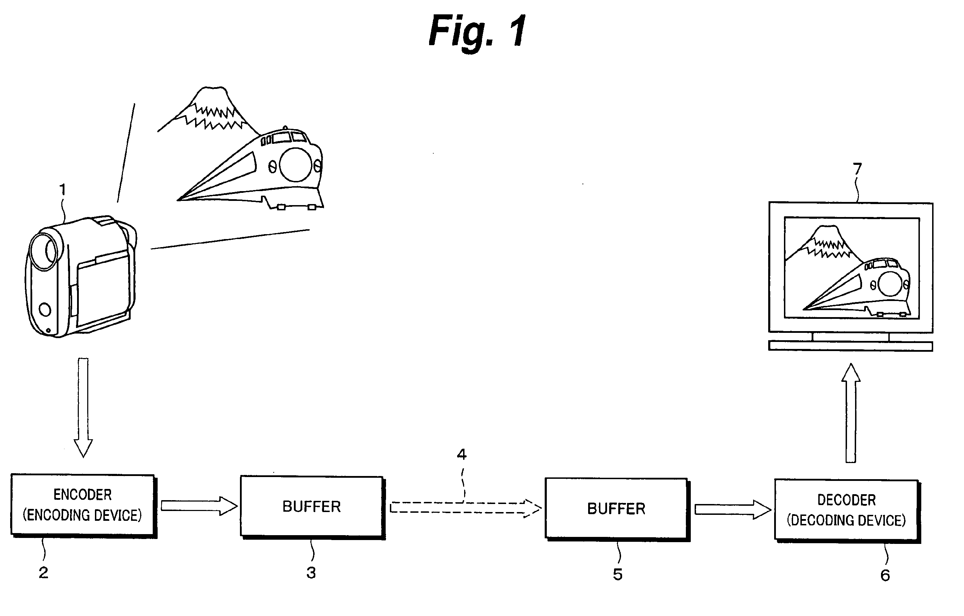

With reference to Fig. 1, the relationship between encoding and decoding in the AVC (Advanced Video Coding) standard, which is a moving image compression-encoding standard, will be described in brief.

An encoder 2 encodes a video signal captured by a video camera 1 or the like and generates a bit stream based on a theory of bidirectional movement compensation inter-frame prediction.

If a buffer 5 on a decoding side overflows or underflows, the buffer 5 fails. In this case, the decoder is not able to correctly decode a bit stream. Thus, the encoder 2 necessitates to generate a bit stream such that the buffer 5 does not fail.

To do that, a concept of a virtual decoder of which an operation of a decoder 6 including a virtual buffer is virtually modeled has been introduced.

The virtual decoder is defined to have two buffers that are a buffer that stores a pre-decoded bit stream (CPB: Coded Picture Buffer) and a buffer that stores decoded pictures (DPB: Decoded Picture Buffer). The buffer sizes of CPB and DPB are defined on the basis of levels.

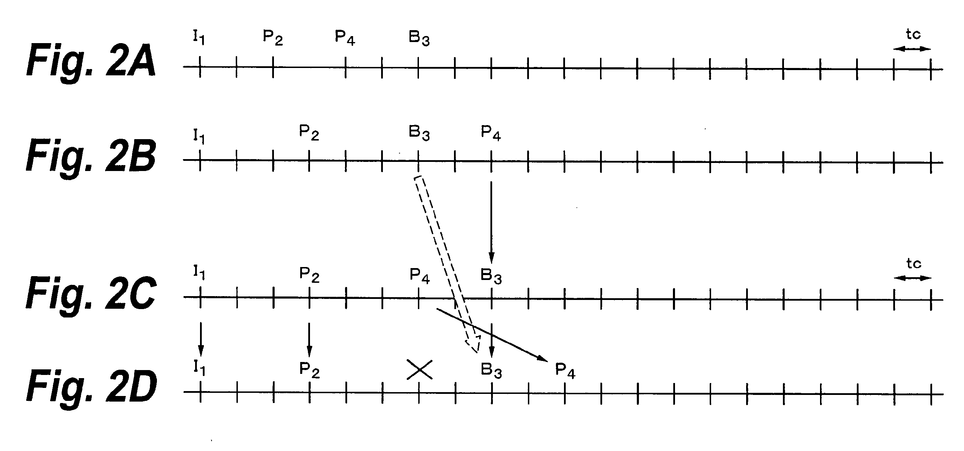

When a picture of one frame or one field of video data is an access unit that is a decoding process unit, an access unit is input to CPB at a predetermined arrival time. Fig. 2A shows a CPB removal time corresponding to a decoding time of CPB. An access unit is instantaneously taken out from CPB at a time defined by the CPB removal time and instantaneously decoded by the virtual decoder. The decoded picture is input to DPB at the CPB removal time.

A picture that has been decoded and input to DPB is rearranged in the displaying order and stored in DPB. Fig. 2B shows a DPB output that is a time corresponding to a displaying time of DPB. An access unit is output from DPB at a time defined by the DPB output time and is displayed.

The CPB removable time and the DPB output time are defined at intervals of for example 16 msec (tc).

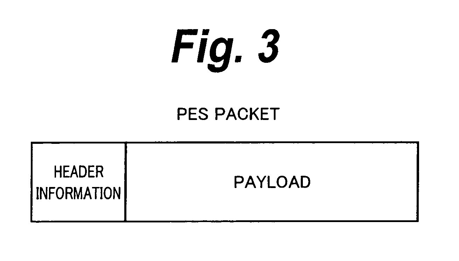

The encoder 2 generates a PES (Packetized Elementary Stream) packet that has a payload containing for example an access unit as shown in Fig. 3. In an AVC bit stream, the CPB removal time and the DPB output time are stored as header information of each picture. Thus, in this case, they are stored in the payload.

The header information of a PES packet contains displaying time information (PTS: Presentation Time Stamp) and so forth. When a PES packet is accessed at random, PTS is used to synchronize video data, audio data, and subtitle data.

The encoder 2 encodes a picture according to rules of the CPB removal time and DPB output time as shown in Fig. 2A and Fig. 2B such that these buffers do not fail. The values of the CPB removal time and the DPB output time of each picture as rules to be followed in the decoding process are contained in the AVC access unit of the payload shown in Fig. 3.

A real player performs the decoding process for an encoded bit stream at a time shown in Fig. 2C and displays the decoded bit stream at a time shown in Fig. 2D. In the real decoding process, a picture is displayed at a rate of for example 30 frames per second based on the DPB output time contained in the AVC access unit of the payload shown in Fig. 3. In the AVC standard, the CPB removal time and the DPB output time of the virtual decoder are described in the header information of a picture.

The decoding time and displaying time in the real decoding process shown in Fig. 2C and Fig. 2D are represented at intervals of tc like the CPB removal time and the DPB output time of the virtual decoder shown in Fig. 2A and Fig. 2B.

A bit stream generated by the encoder 2 is input to a transmission buffer 3 and stored therein. The bit stream stored in the transmission buffer 3 is output as for example a transport stream or a program stream to a transmission path 4 or stored in a record medium (not shown).

A transport stream or a program stream transmitted through the transmission path 4 or the record medium (not shown) is input to the buffer on the decoding side. The decoder 6 extracts the bit stream from the buffer 5 and decodes the bit stream for each picture at the DPB output time (Fig. 2B) in the same order (Fig. 2A) as the decoding order (Fig. 2A) represented by the CPB removal time of the virtual decoder as shown in Fig. 2C (see Non-patent Document 1, "H. 264/AVC (ISO/IEC 14496-10), Annex C".

The decoder 6 causes a display section 7 to display a picture as a result of the decoding process at a time corresponding to the DPB output time (Fig. 2B).

However, as described above, the real decoding process is performed at a time corresponding to the DPB output time, not the CPB removable time (Fig. 2B) defined by the virtual decoder, in the same order as decoding of the virtual decoder (Fig. 2A). Thus, when the decoding order of a picture is different from the displaying order thereof, the picture may not have been decoded at its displaying time.

For example, picture B₃ displayed as a third picture in the displaying order as shown in Fig. 2B is decoded as a fourth picture in the decoding order as shown in Fig. 2A. In contrast, as shown in Fig. 2C, the decoding time of picture B₃ on the real decoding side becomes a time corresponding to the displaying time (Fig. 2B) of picture P₄ displayed originally as a fourth picture in the displaying order after the displaying time (Fig. 2D) of picture B₃ as shown in Fig. 2C. Thus, as shown in Fig. 2D, picture B₃ is not able to be displayed at the original displaying time (Fig. 2B). In Fig. 2D, X means that "B₃" is not displayed at a time corresponding to the DPB output time shown in Fig. 2B. In this case, in the real decoding process, as shown in Fig. 2D, a display wait for picture B₃ occurs.

### Disclosure of the Invention

The present invention is made from the foregoing point of view and an object of the present invention is to encode pictures such that no display wait occurs on the decoding side.

The present invention is an encoding apparatus which encodes pictures such that a decoding apparatus decodes them at times corresponding to their displaying times, including an encoding section which encodes pictures as a picture group which is randomly accessible such that the pictures are decoded before their displaying times.

The encoding section may include a first detecting section which detects a picture which is decoded as a first picture in a decoding order after a displaying time of a picture displayed as a first picture in a displaying order in the picture group, a second detecting section which detects a picture displayed as an m-th picture in a displaying order in the picture group, a third detecting section which detects a picture decoded later than the picture detected by the first detecting section by m pictures from the picture group, and an executing section which executes an encoding process such that the picture detected by the second detecting section is decoded before the picture detected by the third detecting section is decoded.

The present invention is an encoding method of encoding pictures such that a decoding apparatus decodes them at times corresponding to their displaying times, including the step of encoding pictures as a picture group which is randomly accessible such that the pictures are decoded before their displaying times.

The present invention is a program which causes a processor which controls an encoding apparatus which encodes pictures such that a decoding apparatus decodes them at times corresponding to their displaying times, the program including the step of encoding pictures as a picture group which is randomly accessible such that the pictures are decoded before their displaying times.

In the apparatus, method, and program of the present invention, pictures that compose a picture group that is random-accessible are encoded such that they are decoded before their displaying times. According to the present invention, a moving image can be encoded such that no display wait occurs on the decoding side.

### Brief Description of Drawings

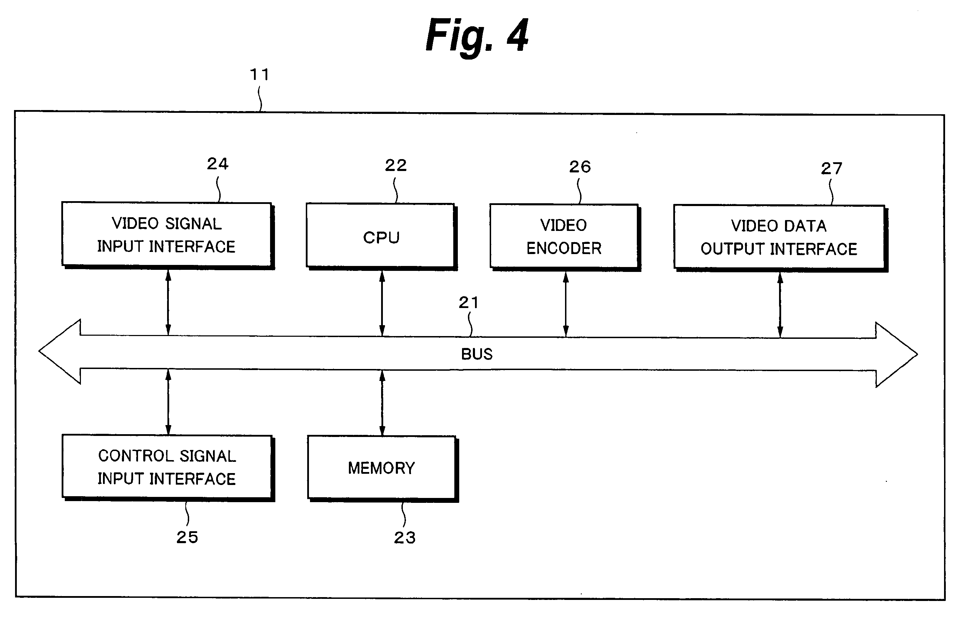

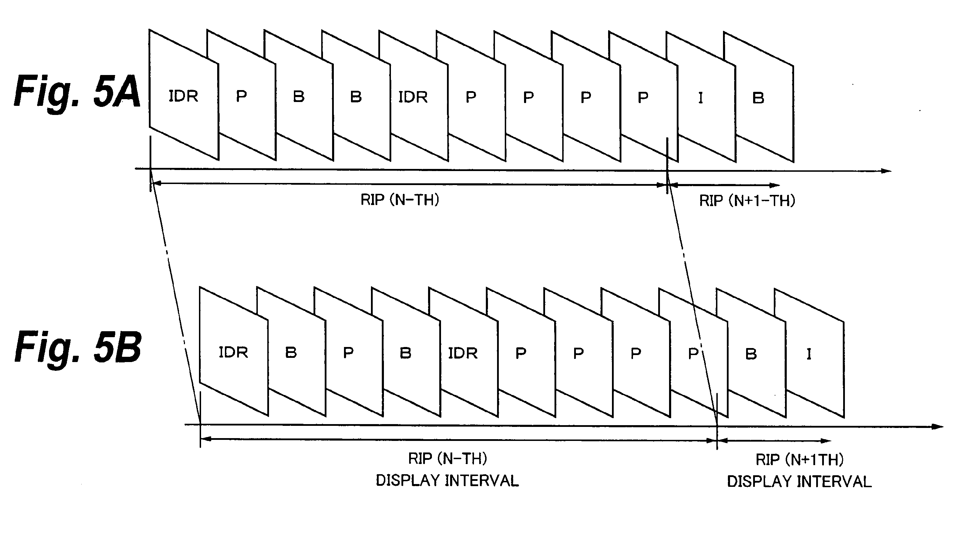

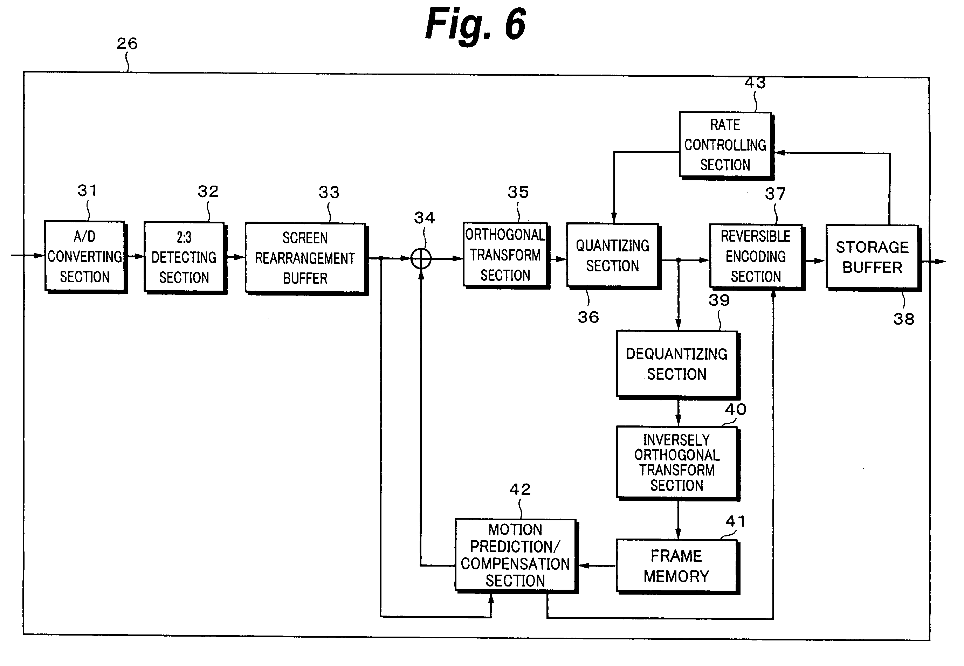

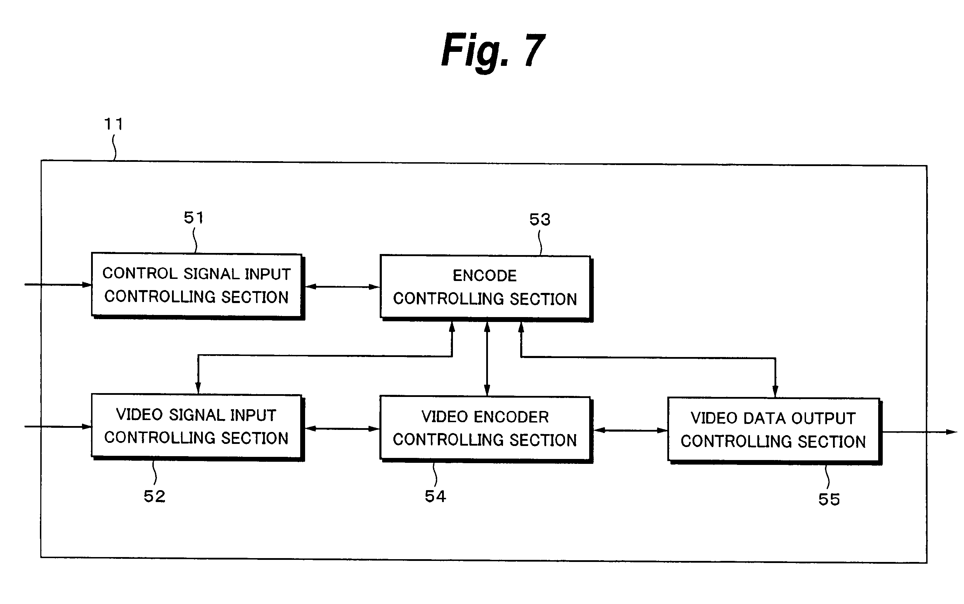

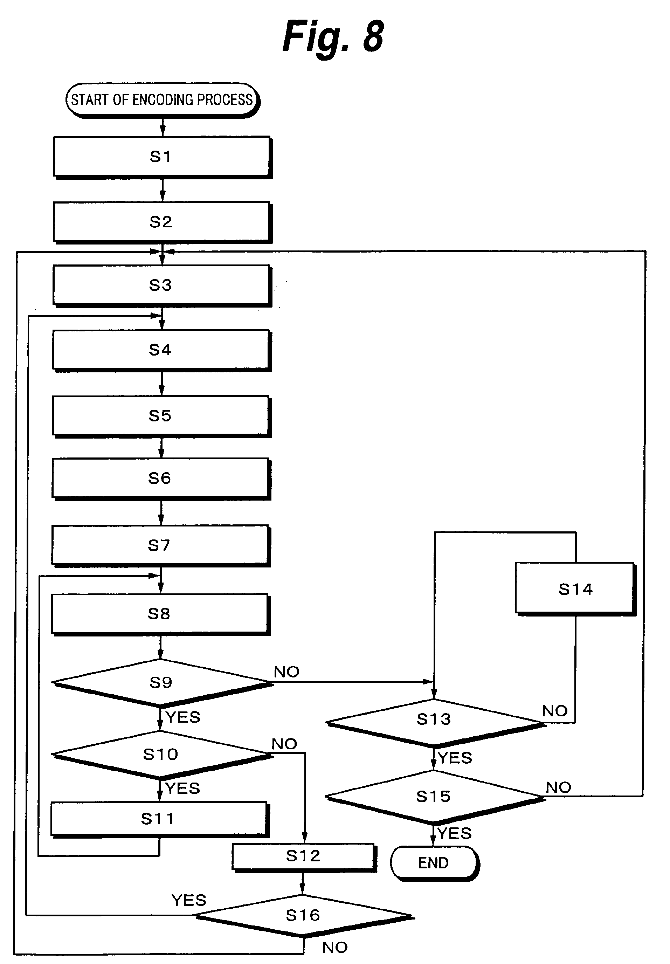

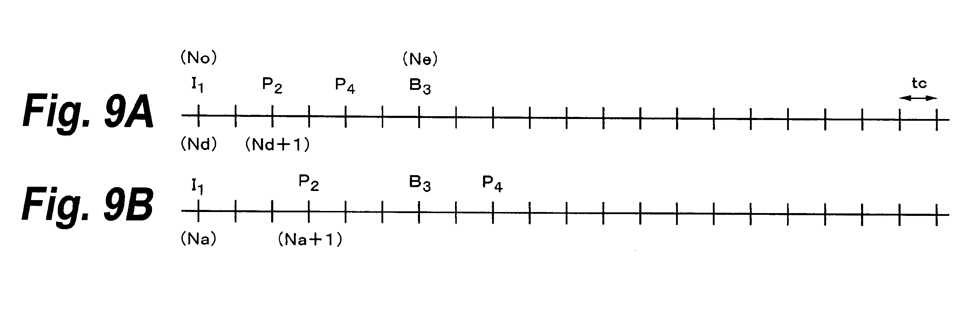

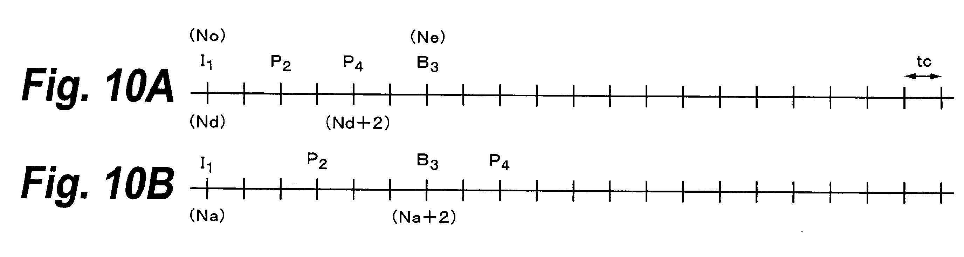

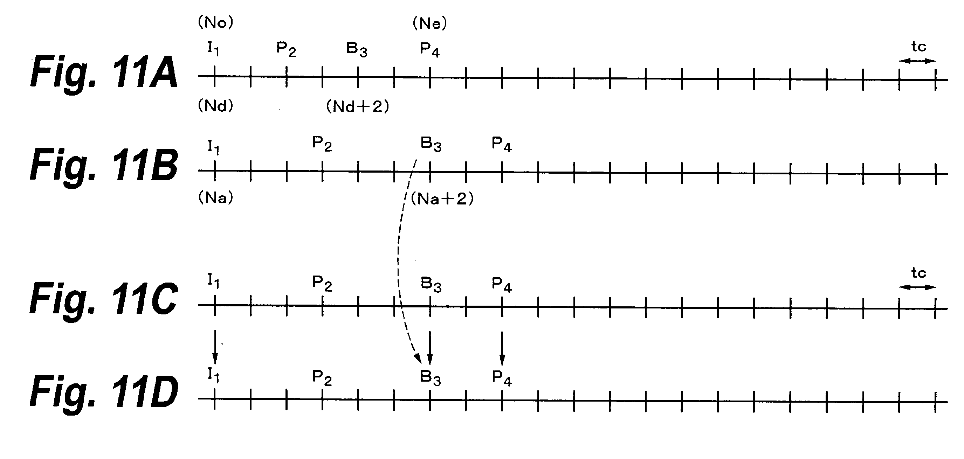

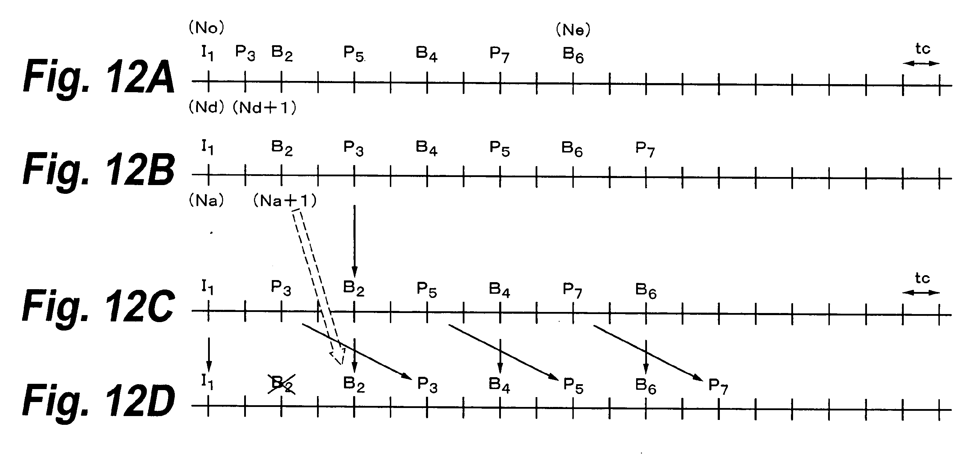

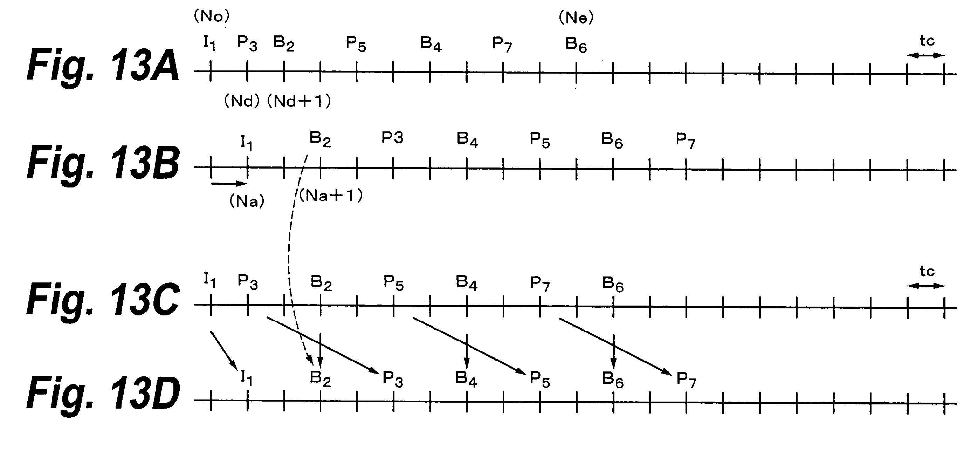

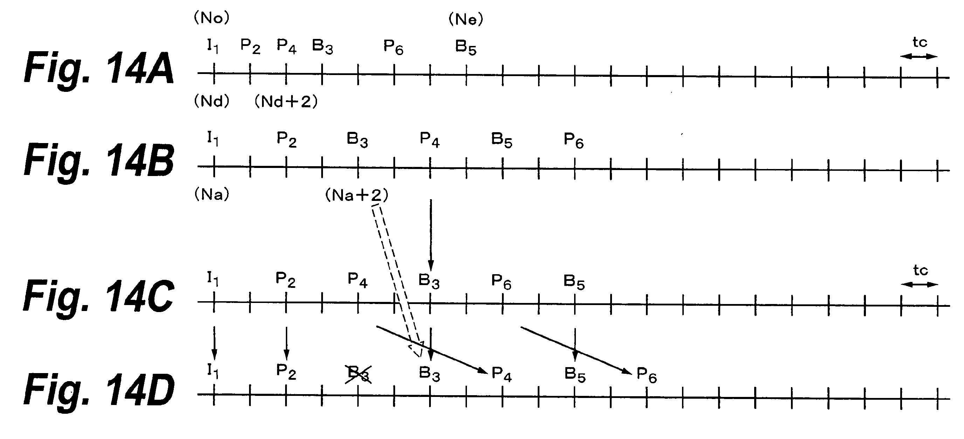

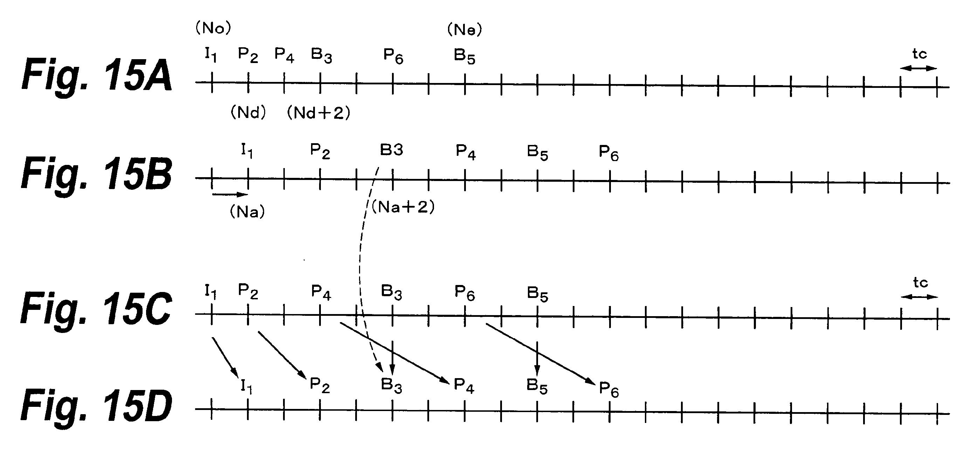

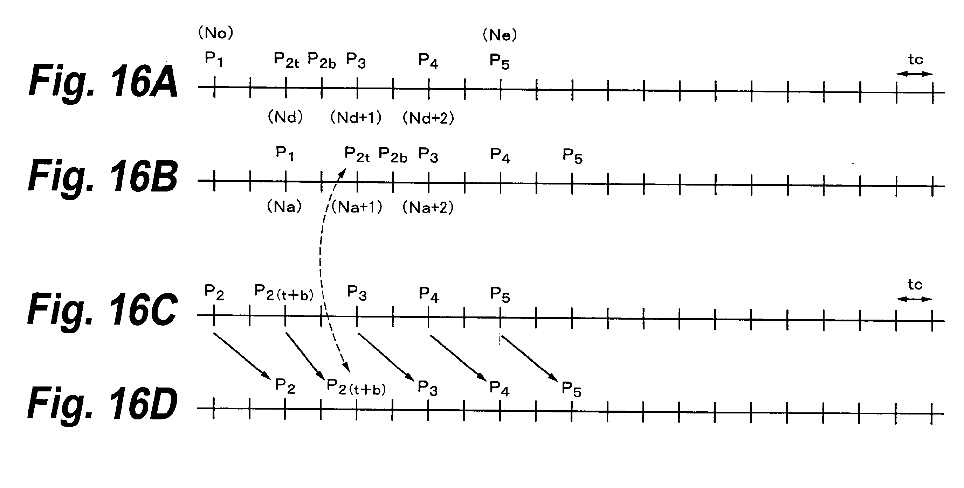

Fig. 1 is a schematic diagram showing an example of a relationship between encoding and decoding; Fig. 2A, Fig. 2B, Fig. 2C, and Fig. 2D are timing charts describing an example of an operation of an encoding apparatus based on a virtual decoder model and an operation of a real player; Fig. 3 is a schematic diagram showing a data structure of a PES packet; Fig. 4 is a block diagram showing an example of a structure of an encoding apparatus according to the present invention; Fig. 5A and Fig. 5B are schematic diagrams describing a decoding order and a displaying order in the unit of an RIP; Fig. 6 is a block diagram showing an example of a structure of a video encoder 26 shown in Fig. 4; Fig. 7 is a block diagram showing an example of a mechanical structure of the encoding apparatus shown in Fig. 4; Fig. 8 is a flow chart describing an operation of the encoding apparatus shown in Fig. 4; Fig. 9A and Fig. 9B are timing charts on which a real player decodes and displays a picture group that the encoding apparatus shown in Fig. 4 has encoded, respectively; Fig. 10A and Fig. 10B are timing charts on which the real player decodes and displays a picture group that the encoding apparatus shown in Fig. 4 has encoded; Fig. 11A, Fig. 11B, Fig. 11C, and Fig. 11D are timing charts on which the real player decodes and displays a picture group that the encoding apparatus shown in Fig. 4 has encoded; Fig. 12A, Fig. 12B, Fig. 12C, and Fig. 12D are timing charts on which the real player decodes and displays a picture group that the encoding apparatus shown in Fig. 4 has encoded; Fig. 13A, Fig. 13B, Fig. 13C, and Fig. 13D are timing charts on which the real player decodes and displays a picture group that the encoding apparatus shown in Fig. 4 has encoded; Fig. 14A, Fig. 14B, Fig. 14C, and Fig. 14D are timing charts on which the real player decodes and displays a picture group that the encoding apparatus shown in Fig. 4 has encoded; Fig. 15A, Fig. 15B, Fig. 15C, and Fig. 15D are timing charts on which the real player decodes and displays a picture group that the encoding apparatus shown in Fig. 4 has encoded; and Fig. 16A, Fig. 16B, Fig. 16C, and Fig. 16D are timing charts on which the real player decodes and displays a picture group that the encoding apparatus shown in Fig. 4 has encoded.

### Best Modes for Carrying out the Invention

Next, embodiments of the present invention will be described. The relationship between the invention described in this specification and embodiments of the present invention is as follows. The description in this section denotes that embodiments that support the invention set forth in the specification are described in this specification. Thus, even if some embodiments are not described in this section, it is not implied that the embodiments do not correspond to the invention. Conversely, even if embodiments are described as the invention in this section, it is not implied that these embodiments do not correspond to other than the invention.

The description of this section does not imply all aspects of the invention described in this specification. In other words, the description in this section corresponds to invention described in the specification. Thus, the description in this section does not deny that there are aspects of the present invention that are not set forth in the claims of the present patent application and that divisional patent applications may be made and/or additional aspects of the present invention may be added as amendments.

An encoding apparatus of claim 1 includes an encoding section which encodes pictures as a picture group which is randomly accessible such that the pictures are decoded before their displaying times (for example, an encode controlling section 53 shown in Fig. 7).

In the encoding apparatus of claim 4, the encoding section includes a first detecting section which detects a picture which is decoded as a first picture in a decoding order after a displaying time of a picture displayed as a first picture in a displaying order in the picture group (for example, the encode controlling section 53, shown in Fig. 7, which performs step S6, shown in Fig. 8),
a second detecting section which detects a picture displayed as an m-th picture in a displaying order in the picture group (for example, the encode controlling section 53, shown in Fig. 7, which performs step S8, shown in Fig. 8),
a third detecting section which detects a picture decoded later than the picture detected by the first detecting section by m pictures from the picture group (for example, the encode controlling section 53, shown in Fig. 7, which performs step S8, shown in Fig. 8), and
an executing section which executes an encoding process such that the picture detected by the second detecting section is decoded before the picture detected by the third detecting section is decoded (for example, the encode controlling section 53, shown in Fig. 7, which performs steps S10 to S12, shown in Fig. 8).

An encoding method and a program of the present invention include the step of encoding pictures as a picture group which is randomly accessible such that the pictures are decoded before their displaying times (for example, the encode controlling section 53, shown in Fig. 7, which performs a process, shown in Fig. 8).

Next, with reference to the accompanying drawings, embodiments of the present invention will be described.

Fig. 4 shows an example of a structure of an encoding apparatus 11 according to the present invention.

The encoding apparatus 11 compression-encodes a moving image based on the H.264/AVC standard. However, the encoding apparatus 11 encodes a moving image such that it is completely decoded only with information of pictures of a group composed of a predetermined number of pictures as shown in Fig. 5A and Fig. 5B (hereinafter this group is referred to as RIP: Recovery Point Interval Pictures) to randomly access the moving image. Fig. 5A shows a decoding order, whereas Fig. 5B shows a displaying order.

Connected to a bus 21 are a CPU (Central Processing Unit) 22, a memory 23, a video signal input interface 24, a control signal input interface 25, a video encoder 26, a video data output interface 27, and so forth.

The CPU 22 and the memory 23 compose a computer system. In other words, the CPU 22 executes a program stored in the memory 23 to control the overall apparatus and perform a process that will be described later. The memory 23 stores the program that the CPU 22 executes. In addition, the memory 23 temporarily stores data that the CPU 22 necessitates to operate. The memory 23 can be structured with only a nonvolatile memory or a combination of a volatile memory and a nonvolatile memory. When the apparatus shown in Fig. 4 is provided with a hard disk that stores the program that the CPU 22 executes, the memory 23 can be structured with only a nonvolatile memory.

The program that the CPU 22 executes can be permanently or temporarily stored in a removable record medium such as a disc, a flexible disc, a CD-ROM (Compact Disc Read Only Memory), an MO (Magneto Optical) disc, a magnetic disc, or memory card. Such a removable record medium can be provided as so-called package software.

The program can be pre-stored in the memory 23. Instead, the program can be installed from such a removable record medium to the apparatus. Instead, the program can be wirelessly transferred from a download site to the disc device through a digital broadcasting satellite. Instead, the program can be transferred from such a site to the disc device through a network such as LAN (Local Area Network) or the Internet by cables. The disc device can receive the program from such a site and install it to the built-in memory 23.

The program may be processed by a single CPU. Instead, the program may be distributively processed by a plurality of CPUs.

The video signal input interface 24 inputs a video signal from a video camera or the like under the control of the CPU 22 and supplies the video signal to the CPU 22, the memory 23, the video encoder 26, and so forth through the bus 21.

The control signal input interface 25 inputs a control signal corresponding to user's operation for a key (button) (not shown) and a remote controller and supplies the control signal to the CPU 22 through the bus 21. The control signal input interface 25 also functions, for example, as a modem (including an ADSL (Asymmetric Digital Subscriber Line) modem) and a communication interface such as an NIC (Network Interface Card).

The video encoder 26 encodes a video signal inputted through the video signal input interface 24 and supplies video data obtained as a resultant encoded video signal to the CPU 22 through the bus 21.

The video data output interface 27 outputs a video transport stream into which the CPU 22 has packetized the video data.

Fig. 6 shows an example of a structure of the video encoder 26.

An A/D converting section 31 converts a picture supplied as an analog signal into a digital signal and supplies the digital signal to a 2-3 detecting section 32. In this example, it is assumed that an image signal of an NTSC format picture that has been 2-3 pulled down is supplied to the A/D converting section 31 in the unit of a field.

The 2-3 detecting section 32 detects a 2-3 rhythm with inter-field difference information that is a difference in two fields of pictures supplied from the A/D converting section 31.

In other words, in the 2-3 pull-down, each frame of a movie film is alternately converted into two fields and three fields of the NTSC format. Thus, pictures of the NTSC format have a so-called 2-3 rhythm of which 2-field groups and 3-field groups obtained by one frame of sequential scanning of a movie film are alternately repeated. The 2-3 detecting section 32 detects these 2-field groups and 3-field groups.

The 2-3 detecting section 32 forms a sequential scanning picture of one frame with a detected 2-field picture group or 3-field picture group and supplies the sequential scanning picture of one frame to a screen rearrangement buffer 3. Fig. 2A, Fig. 2B, Fig. 2C, and Fig. 2D show an example of pictures that have been 2-3 pulled down. In other words, there are 3 tc and 2 tc as intervals of displaying times.

The screen rearrangement buffer 33 temporarily stores pictures, rearranges them in a predetermined encoding order, and supplies the rearranged pictures as encoding target pictures (hereinafter simply referred to as "target pictures") in the unit of a macro block to an adding device 34.

When a target picture is an intra-encoding picture, the adding device 34 directly supplies the target picture to an orthogonal transform section 35.

When a target picture is an inter-encoding picture, the adding device 34 subtracts from the target picture a predictive picture supplied from a motion prediction/compensation section 42 and supplies the difference to the orthogonal transform section 35.

In other words, the motion prediction/compensation section 42 not only detects a motion vector of pictures stored in the screen rearrangement buffer 33, but also reads from a frame memory 41 a picture that becomes a reference picture of the target picture that has been encoded and decoded, performs a motion compensation for the reference picture based on the motion vector, and generates a predictive picture of the target picture in an optimum predictive mode. The motion prediction/compensation section 42 supplies the predictive picture to the adding device 34. The adding device 34 subtracts from the target picture the predictive picture supplied from the motion prediction/compensation section 42 and supplies the difference to the orthogonal transform section 35.

The orthogonal transform section 35 performs orthogonal transform such as discrete cosine transform for the target picture supplied from the adding device 34 or a differential picture as the result of which the predictive picture has been subtracted from the target picture and supplies a transform coefficient as the transformed result to a quantizing section 36.

The quantizing section 36 quantizes the transform coefficient supplied from the orthogonal transform section 35 at a quantizer step controlled by a rate controlling section 43 that will be described later and supplies a resultant quantizer coefficient to a reversible encoding section 37 and a dequantizing section 39.

The reversible encoding section 37 performs reversible encoding for example variable-length encoding or arithmetic encoding for the quantizer coefficient supplied from the quantizing section 36, the motion vector detected by the motion prediction/compensation section 42, and so forth and supplies resultant encoded data to a storage buffer 38.

The reversible encoding section 37 inserts the motion vector and so forth into a so-called header portion of encoded data.

The storage buffer 38 temporarily stores encoded data supplied from the reversible encoding section 37 and outputs them at a predetermined rate.

The storage amount of encoded data in the storage buffer 38 is supplied to the rate controlling section 43. The rate controlling section 43 performs feedback control for the quantizer step of the quantizing section 36 based on the storage amount of the storage buffer 38 such that the storage buffer 38 neither overflows nor underflows.

In contrast, the dequantizing section 39 dequantizes the transform coefficient supplied from the quantizing section 36 at the same quantizer step as does the quantizing section 36 and supplies the resultant transform coefficient to an inversely orthogonal transform section 40. The inversely orthogonal transform section 40 performs the inversely orthogonal transform process for the transform coefficient supplied from the dequantizing section 39 to decode the original intra-encoded picture or the differential picture of which the predictive picture has been subtracted from the original inter-encoded picture. The inversely orthogonal transform section 40 supplies the decoded picture to the frame memory 41.

The frame memory 41 stores the result of which the encoded picture has been decoded. In addition, the frame memory 41 adds the result of which the differential picture has been decoded and the predictive picture that has been subtracted from the inter-encoded picture and that has been obtained from the motion prediction/compensation section 42. As a result, the frame memory 41 decodes the inter-encoded picture and stores it.

The motion prediction/compensation section 42 generates a predictive picture with a reference picture that is stored in the frame memory 41.

Fig. 7 shows an example of a functional structure of the encoding process that the CPU 22 shown in Fig. 4 executes.

A control signal input controlling section 51 informs an encode controlling section 53 of a command that has been input through the control signal input interface 25 (Fig. 4).

A video signal input controlling section 52 supplies a video signal that has been input through the video signal input interface 24 (Fig. 4) to the video encoder 26 (Fig. 4).

The encode controlling section 53 controls each section to encode the video signal that has been input through the video signal input interface 24 (Fig. 4) according to a command supplied from the control signal input controlling section 51 as will be described later.

A video encoder controlling section 54 controls the video encoder 26 (Fig. 4) to encode the video signal that has been input through the video signal interface 24 (Fig. 4) under the control of the encode controlling section 53.

A video data output controlling section 55 controls the video data output interface 27 (Fig. 4) to packetize a bit stream generated by the video encoder 26 and outputs the resultant transport stream under the control of the encode controlling section 53.

Next, with reference to a flow chart shown in Fig. 8, an operation of the encoding process of the encoding apparatus 11 will be described. First of all, the encoding process will be described in brief. Then, a specific example of the encoding process will be described in detail.

At step S1, the encode controlling section 53 obtains the displaying time of a picture to be encoded on the basis of the input order from the video signal input interface 24.

At step S2, the encode controlling section 53 informs the video encoder controlling section 54 of a predetermined encoding order based on the displaying time. The video encoder controlling section 54 controls the video encoder 26 to encode the video signal that has been input through the video signal input interface 24 in the encoding order.

At step S3, the encode controlling section 53 selects one RIP from picture sequences encoded by the video encoder 26. In an RIP, the first picture and the last picture of pictures arranged in the decoding order are referred to as picture No and picture Ne, respectively.

At step S4, the encode controlling section 53 reads the DPB output times of the pictures that compose the RIP selected at step S3. At step S5, the encode controlling section 53 reads the CPB removable times of these pictures.

At step S6, the encode controlling section 53 detects a picture that is decoded as a first picture in the decoding order in the pictures that compose the RIP selected at step S3 (hereinafter this picture is referred to as picture Nd) after the displaying time of a picture that is displayed as a first picture in the displaying order in the RIP selected at step S3 (hereinafter, this picture is referred to as picture Na).

At step S7, the encode controlling section 53 initializes coefficient m that is used in a later process to value 1.

At step S8, the encode controlling section 53 detects a picture that is displayed later than picture Na detected at step S6 by m pictures (hereinafter this picture is referred to as picture Na+m) and a picture that is decoded later than picture Nd by m pictures (hereinafter, this picture is referred to as picture Nd+m).

At step S9, the encode controlling section 53 determines whether or not picture Nd+m detected at step S8 is a picture earlier than the last picture Ne of the RIP. When the determined result denotes that picture Nd+m is earlier than the last picture Ne, the flow advances to step S10.

At step S10, the encode controlling section 53 determines whether or not picture Na+m is contained in a picture sequence {No, ..., Nd+m} in the decoding order. When the determined result denotes that picture Na+m is contained in the picture sequence, the flow advances to step S11. At step S11, the encode controlling section 53 increments the value of coefficient m by 1. Thereafter, the flow returns to step S8.

In contrast, when the determined result at step S10 denotes that picture Na+m is not contained in the picture sequence, the flow advances to step S12. At step S12, the encode controlling section 53 changes the encoding order of the RIP selected at step S3 and controls the video encoder controlling section 54 to re-encode the RIP.

As one means of re-encoding at step S12, if a display wait occurs due to re-ordering, the decoding order of pictures in the RIP can be changed so that the displaying order of the RIP nearly becomes the same as the decoding order of the RIP. For example, when picture Na+m is displayed, the decoding order of this picture is changed to the decoding order of a picture contained in the picture sequence {No, ..., Nd+m} so that picture Na+m is contained in {No, ..., Nd+m}. When the decoding order is changed, the relationships of pictures that reference other pictures for motion compensation are changed. Thus, picture types assigned to improve encoding efficiency can be adaptively changed.

When the RIP has been re-encoded at step S12, the flow advances to step S16. At step S16, it is determined whether or not the display wait has been solved. When the determined result denotes that the display wait has been solved, the flow returns to step S4. At step S4, the RIP is processed from the changed position. Thereafter, the process is recursively performed.

As another means of re-encoding at step S12, decoding times of all pictures in the RIP can be caused to be earlier than their displaying times without changing the arrangement of the pictures in the RIP. For example, when the CPB removable time as the picture decoding time is caused to be earlier than the DPB output time as the picture displaying time placed in the picture header, picture Nd can be changed to a picture earlier than picture Nd by several pictures in the decoding order in the RIP. For example, picture Nd+m is changed to picture Nd. In this case, since the decoding time of a fist picture in the decoding order in the RIP is later than the decoding time of a last picture in the decoding order of the immediately preceding RIP of the stream (picture Ne of the immediately preceding RIP), this restricts the case that the decoding time is caused to be earlier than the displaying time.

At step S16, it is determined whether or not the display wait has been solved. When the determined result denotes that the display wait has been solved, the flow returns to step S4. The process is repeated after step S4.

At step S16, it may be determined that the display wait have not been solved because the decoding interval between the immediately preceding RIP and the current RIP is not sufficient to cause the decoding times to be earlier than the displaying times and prevent a display wait from occurring. In this case, the flow returns to step S3. At step S3, the earliest RIP of the stream is selected and the decoding times are caused to be earlier than the displaying times from the beginning of the stream. As a result, a display wait can be prevented from occurring.

The value of coefficient m is repeatedly incremented at step S11. When the determined result at step S9 denotes that picture Nd+m is not a frame earlier than picture Ne, the flow advances to step S13.

At step S13, the encode controlling section 53 determines whether or not picture Na+m is contained in the picture sequence (RIP) {N₀, ..., Ne}. When the determined result denotes that picture Na+m is not contained in the picture sequence, the flow advances to step S14.

At step S14, the encode controlling section 53 changes the encoding order in the RIP selected at step S3 and controls the video encoder controlling section 54 to re-encode the RIP. Thereafter, the flow returns to step S13.

When the determined result at step S13 denotes that picture Na+m is contained in the picture sequence {N₀, ... , Ne}, the flow advances to step S15. At step S15, the encode controlling section 53 determines whether all the RIPs have been selected at step S3. When the determined result denotes that all the RIPs have not been selected, the flow returns to step S3. At step S3, the next RIP is selected. Thereafter, the process is repeated after step S4.

When the determined result at step S15 denotes that all the RIPs have been selected, the process is completed.

Next, with reference to an example shown in Fig. 9A and Fig. 9B, Fig. 10A and Fig. 10B, and Fig. 11A, Fig. 11B, Fig. 11C, and Fig. 11D, the foregoing encoding process will be described in detail. In this example, as shown in Fig. 9B, Fig. 10B, and Fig. 11B, four pictures of an RIP displayed in the order of DPB output times of a virtual decoder (step S1) have been encoded such that they are decoded in the order of CPB removable times of the virtual decoder as shown in Fig. 9A, Fig. 10A, and Fig. 11A (step S2).

Fig. 9A shows the CPB removable times of the pictures shown in Fig. 2A. Fig. 9B shows the DPB output times of the pictures shown in Fig. 2B (m = 1). Fig. 10A, Fig. 11A, Fig. 10B, and Fig. 11B also show these relationships (m = 2).

In other words, picture I₁ (picture Nd) that is decoded as a first picture in the decoding order in the pictures of the PIP that are decoded after the displaying time of picture I₁ (picture Na) that is displayed as a first picture in the displaying order in the RIP (steps S4, S5, and S6).

Next, m = 1 is set (at step S7). Picture P₂ (picture Na+1) (Fig. 9B) displayed later than picture I₁ (picture Na) by one picture and picture P₂ (picture Nd+1) (Fig. 9A) decoded later than picture I₁ by one picture are detected (at step S8).

Since picture P₂ (picture Nd+1) is a picture earlier than picture Ne that is the last picture in the decoding order of the RIP (step S9), it is determined whether or not picture P₂ (picture Na+1) in the displaying order in contained in a picture sequence from picture No to picture Nd+1 in the decoding order, namely picture sequence {I₁, P₂} (at step S10). In this case, since picture P₂ is contained in the picture sequence, coefficient m is incremented by 1 (m = 2) (at step S11).

In this case, since m is 2, picture P₄ (picture Nd+2) (Fig. 11A) decoded later than picture I₁ (picture Nd) by two pictures and picture B₃ (picture Na+2) (Fig. 10B) displayed later than pictureI₁ (picture Na) by two pictures are detected (at step S8).

Since picture P₄ (picture Nd+2) is a picture earlier than picture Ne that is the last picture in the decoding order of the RIP (at step S9), it is determined that picture B₃, picture Na+2 in the displaying order, not be contained in a picture sequence from picture No to picture Nd+m in the decoding order, namely picture sequence {I₁, P₂, P₃} (at step S10).

Thus, when a picture (picture B3 if m = 2), picture Na+m in the displaying order, is not contained in a picture sequence from picture No to picture Nd+m in the decoding order (picture sequence {I₁, P₂, P₄} if m = 2), as shown in Fig. 2C, the decoding time of picture B₃ becomes a time corresponding to the displaying time of picture P₄ (Fig. 2B) displayed originally as a fourth picture in the displaying order after the displaying time of picture B₃ (Fig. 2D). Thus, as shown in Fig. 2D, picture B₃ is not displayed at the original displaying time.

In this case, for example, as shown in Fig. 11A, picture B₃ and picture P₄ shown in Fig. 9A and Fig. 10A are re-encoded such that the CPB removable times of picture B₃ and picture P₄ in the virtual decoder are substituted each other (at step S12).

As a result, even in the case of m = 2, picture B₃ is detected as picture Nd+2 (Fig. 11A) decoded later than picture Nd (picture I₁) that is decoded as a first picture in the decoding order in the RIP (at step S8). Thus, after these pictures have been re-encoded, picture Na+2 in the displaying order (picture B₃) is also contained in picture sequence {I₁, P₂, B₃} from picture No to picture Nd+2 in the decoding order (at step S10). Thus, in the real player, as shown in Fig. 2C and 2D, no display wait occurs on the decoding side. As shown in Fig. 11C and Fig. 11D, picture B₃ is decoded at a time corresponding to the displaying time of picture B₃. As a result, picture B₃ can be displayed at its displaying time.

Such a process is repeated until picture Na+m becomes the last picture Ne of the RIP.

In the foregoing example, the encoding order of pictures is changed and then the pictures are re-encoded in the changed encoding order (at step S12). Instead, another encoding condition may be changed.

When pictures have been encoded on the basis of a rule of a virtual decoder model shown in Fig. 12A and Fig. 12B, picture B₂ (Fig. 12B) displayed as a second picture in the displaying order (Fig. 12B) is decoded as a third picture in the decoding order (Fig. 12A). On the other hand, the decoding time of picture B₂ on the decoding side becomes a time corresponding to the displaying time of picture P₃ (Fig. 12B) displayed originally as a third picture in the displaying order after the displaying time of picture B₂ (Fig. 12D) as shown in Fig. 12C. Thus, picture B₂ is not able to be displayed at its original displaying time (Fig. 12B).

In other words, in the case of m = 1, picture Nd+1 is picture P₃ (Fig. 12A), whereas picture Na+1 is picture B₂ (Fig. 12B). Picture B₂ that is an Na+1-th picture in the displaying order is not contained in picture sequence {I₁, P₃} that is a picture sequence from picture No to picture Nd+1 in the decoding order.

In this case, as shown in Fig. 13B, the pictures are re-encoded such that the DPB output times are delayed by 1 tc (at step S12). Thus, as shown in Fig. 13A, in the case of m = 1, since picture Nd+1 becomes picture B₂, picture B₂, which is an (Na+1)-th picture in the displaying order, is contained in picture sequence {I₁, P₃, B₂} from picture No to picture Nd+1 in the decoding order. In other words, in the real decoding process, as shown in Fig. 13C and Fig. 13D, picture B₂ is decoded at its displaying time. Thus, picture B₃ can be displayed at its original displaying time.

Likewise, when pictures have been encoded on the basis of a rule of a virtual decoder model shown in Fig. 14A and Fig. 14B, picture B₃ (Fig. 14B) displayed as a third picture in the displaying order is decoded as a fourth picture in the decoding order (Fig. 14A). On the other hand, the decoding time of picture B₃ on the decoding side becomes a time corresponding to the displaying time of picture P₄ (Fig. 14B) displayed originally as a fourth picture in the displaying order after the displaying time of picture B₃ (Fig. 14D) as shown in Fig. 14C. Thus, as shown in Fig. 14D, picture B₃ is not able to be displayed at the original displaying time (Fig. 14B).

In other words, in the case of m = 2, picture Nd+2 in the decoding order is picture P₄ (Fig. 14A), whereas picture Na+2 in the displaying order is picture B₃ (Fig. 14B). Thus, picture B₃, which is picture Na+2 in the displaying order, is not contained in picture sequence {I₁, P₂, P₄}, which is a picture sequence from picture No to picture Nd+2 in the decoding order.

In this case, as shown in Fig. 15B, when pictures are re-encoded such that their DPB output timings are delayed by 1 tc (at step S12), in the case of m = 2 as shown in Fig. 15A, picture Nd+2 in the decoding order becomes picture B₃. Thus, picture B₃, which is picture Na+1 in the displaying order, is contained in picture sequence {I₁, P₂, P₄, B₃ from picture No to picture Nd+2 in the decoding order. In other words, as shown in Fig. 15C and Fig. 15D, in the real decoding process, picture B₃ is decoded at its displaying time. Thus, picture B₃ is displayed at its original displaying time.

As described above, when pictures are decoded in synchronization with their displaying times, an RIP, which is a group of a predetermined number of pictures, is defined such that pictures are randomly accessible. For each RIP, pictures are encoded such that the virtual decoder decodes picture Na+m displayed as an m-th picture in the displaying order after the displaying time of picture Na displayed as a first picture in the displaying order before a picture later than picture Nd decoded as a first picture in the decoding order by m pictures is decoded. Thus, a display wait for a picture can be prevented on the decoding side.

There may be a picture of a top field (for example, P₂ₜ in Fig. 16A, Fig. 16B, Fig. 16C, and Fig. 16D) and a picture of a bottom field (for example, P_{2b} in Fig. 16A, Fig. 16B, Fig. 16C, and Fig. 16D). In this case, when picture Nd is detected, the CPB removal time of the picture of the first field (for example, P₂ₜ in Fig. 16A, Fig. 16B, Fig. 16C, and Fig. 16D) is referenced. On the other hand, when picture Nd+m and picture Na+m are detected, picture P₂ₜ and picture P_{2b} are treated as one picture. In other words, when picture Nd+m and picture Na+m are detected, picture Nd+1 in the decoding order is P₃, whereas picture Na+1 in the displaying order is P₂ₜ and P₂ₘ ·

In this example, the real decoding process is performed in the unit of a frame or a pair of fields. Thus, in Fig. 16C and Fig. 16D, P₂ₜ and P_{2b} are collectively represented as P₂₍ₜ₊₂₎.

In this specification, steps describing a program provided by a record medium are chronologically processed in the coding order. Instead, they may be processed in parallel or discretely.

### DESCRIPTION OF REFERENCE NUMERALS

- 11: ENCODING APPARATUS
- 21: BUS
- 22: CPU
- 23: MEMORY
- 24: VIDEO SIGNAL INPUT INTERFACE
- 25: CONTROL SIGNAL INPUT INTERFACE
- 26: VIDEO ENCODER
- 27: VIDEO DATA OUTPUT INTERFACE
- 51: CONTROL SIGNAL INPUT CONTROLLING SECTION
- 52: VIDEO SIGNAL INPUT CONTROLLING SECTION
- 53: ENCODE CONTROLLING SECTION
- 54: VIDEO ENCODER CONTROLLING SECTION
- 55: VIDEO DATA OUTPUT CONTROLLING SECTION
- S1: OBTAIN DISPLAYING TIMES OF PICTURES.
- S2: ENCODE PICTURES IN PREDETERMINED ENCODING ORDER (DECIDE DECODING TIMES).
- S3: SELECT RIP {N_{0,} ... , Ne}.
- S4: READ DISPLAYING TIMES OF PICTURES THAT COMPOSE RIP.
- S5: READ DECODING TIMES OF PICTURES THAT COMPOSE RIP.
- S6: DETECT P I CTURE Nd THAT I S DECODED AS FIRST PICTURE IN DECODING ORDER IN PICTURES OF RIP DECODED AFTER DISPLAYING TIME OF PICTURE Na DISPLAYED AS FIRST PICTURE IN DISPLAYING ORDER.
- S7: m = 1
- S8: DETECT PICTURE Na+m AND PICTURE Nd+m.
- S9: IS PICTURE Nd+m FRAME EARLIER THAN PICTURE Ne ?
- S10: DOES {No, ..., Nd+m} CONTAIN PICTURE Na+m ?
- S11: m ← m + 1
- S12: RE-ENCODE RIP.
- S13: DOES {PICTURE No, ... , Ne} CONTAIN PICTURE Na+m ?
- S14: RE-ENCODE RIP.
- S15: HAVE ALL RIPS BEEN SELECTED ?
- S16: HAS DISPLAY WAIT BEEN SOLVED ?

## Claims

1. An encoding apparatus which encodes pictures such that a decoding apparatus decodes them at times corresponding to their displaying times, comprising:
an encoding section which encodes pictures as a picture group which is randomly accessible such that the pictures are decoded before their displaying times.

2. The encoding apparatus as set forth in claim 1,
wherein the encoding section encodes the pictures of the picture group in a changed encoding order.

3. The encoding apparatus as set forth in claim 1,
wherein the encoding section encodes the picture of the picture group such that their displaying times are delayed for a predetermined value.

4. The encoding apparatus as set forth in claim 1,
wherein the encoding section includes:
a first detecting section which detects a picture which is decoded as a first picture in a decoding order after a displaying time of a picture displayed as a first picture in a displaying order in the picture group;
a second detecting section which detects a picture displayed as an m-th picture in a displaying order in the picture group;
a third detecting section which detects a picture decoded later than the picture detected by the first detecting section by m pictures from the picture group; and
an executing section which executes an encoding process such that the picture detected by the second detecting section is decoded before the picture detected by the third detecting section is decoded.

5. An encoding method of encoding pictures such that a decoding apparatus decodes them at times corresponding to their displaying times, comprising the step of:
encoding pictures as a picture group which is randomly accessible such that the pictures are decoded before their displaying times.

6. A program which causes a processor which controls an encoding apparatus which encodes pictures such that a decoding apparatus decodes them at times corresponding to their displaying times, the program comprising the step of:
encoding pictures as a picture group which is randomly accessible such that the pictures are decoded before their displaying times.
